# EUROPEAN PATENT APPLICATION

(11) **EP 4 174 143 A1**
(43) Date of publication of application: **03.05.2023**
(21) Application number: 22710947.7
(22) Date of filing: 18.01.2022
(51) Int. Cl.: C09D 11/101, C09D 11/322, C09D 11/38

(54) **INK, AND PREPARATION METHOD AND CURING METHOD THEREFOR**

(30) Priority: 25.06.2021 CN 202110712955
(71) Applicant: Dongguan NVT Technology Limited, Donguan, Guangdong 523000 (CN)
(72) Inventor: WANG, Yongzhen, Dongguan Guangdong 523000 (CN); YU, Changjiang, Dongguan Guangdong 523000 (CN); SUN, Kailun, Dongguan Guangdong 523000 (CN); ZHANG, Kefeng, Dongguan Guangdong 523000 (CN)
(74) Representative: Icosa
(86) International application number: PCT/CN2022/072559
(87) International publication number: WO 2022/267462

(57) **Abstract**

This application provides an ink, and preparation and curing methods thereof. The ink includes the following ingredients by weight: pigment: 5 to 10 wt%; dispersant: 1 to 5 wt%; photoinitiator: 5 to 8 wt%; monofunctional reactive monomer: 10 to 15 wt%; multifunctional reactive monomer: 25 to 40 wt%; acrylic resin: 20 to 35 wt%; coupling agent: 2 to 5 wt%; defoamer: 0.1 to 1 wt%; and leveling agent: 0.1 to 1 wt%. The ink according to this application can concurrently meet various performance requirements such as deep curing, high adhesion, high resistance to abrasion and perspiration, and ease of correction.

## Description

This application claims priority to Chinese Patent Application No. 202110712955.X filed on June 25, 2021.

### TECHNICAL FIELD

This application relates to the technical field of polymer material processing, and in particular, to an ink applied to the surface of a battery and preparation and curing methods thereof.

### BACKGROUND

With the wide application of smart devices such as smart phones and notebook computers, the safety and reliability of a battery in the devices are of much concern, and are safeguarded by safety information records of the battery in a whole process from production and assembling to use. Therefore, the means of recording information in real time is urgently required to give each battery unique "identity information". Currently, the "identity information" is recorded by printing relevant information, icons, and other content on the surface of the battery. Main printing methods include pad printing and screen printing. Because pad printing and screen printing are implemented with a stencil, the "identity information" graphics marked on the stencil cannot be changed in real time, and the information printed on the surface of each battery cannot be differentiated. In addition, conventional pad printing and screen printing technologies adopt solvent-type ink. The solvent-type ink emits a large amount of volatile organic compounds (VOCs), and brings great challenges to safety of the operators and the environment. Therefore, digital printing technology characterized by low energy consumption, intelligence, and instant customization of graphics begins to be favored.

The digital printing technology uses UV-curable ink to implement rapid curing. However, although the conventional UV-curable ink sticks hard and is resistant to solvents and heat, it is difficult to wipe out cured ink in a non-destructive manner. Consequently, the digital print on the surface of the battery is not reversible, and cannot be corrected quickly. Once a printing error occurs, the entire battery will be scrapped, thereby incurring great material loss in the production process. Consequently, there is a significant contradiction between ink adhesion and non-destructive removal of the ink.

### SUMMARY

To solve the foregoing problem, this application aims to provide an ink to overcome the difficulty of correction after the ink is cured on the surface of a battery.

In addition, it is necessary to provide a preparation method and a curing method of the ink.

A technical solution of an embodiment of this application is: an ink, including the following ingredients by weight: pigment: 5 to 10 wt%; dispersant: 1 to 5 wt%; photoinitiator: 5 to 8 wt%; monofunctional reactive monomer: 10 to 15 wt%; multifunctional reactive monomer: 25 to 40 wt%; acrylic resin: 20 to 35 wt%; coupling agent: 2 to 5 wt%; defoamer: 0.1 to 1 wt%; and leveling agent: 0.1 to 1 wt%.

A main function of the pigment is to grant an overlaying force to the ink. Main functions of the monofunctional reactive monomer and the multifunctional reactive monomer are to reduce the viscosity of the ink, and enable the ink to be shaped by digital printing. By adjusting the mixing ratio between the monofunctional reactive monomer and the multifunctional reactive monomer, the viscosity of the ink can be adjusted, the crosslinking density can be increased, and the performance of the ink can be improved. The monofunctional reactive monomer and the multifunctional reactive monomer can adjust the wetting and penetration performance of the ink on a substrate, and increase the adhesion of the ink to the substrate. With the monofunctional reactive monomer and the multifunctional reactive monomer mixed at an appropriate ratio and accounting for an appropriate weight percent, the ink can generate more free radicals during curing, thereby increasing the curing speed of the ink. The acrylic resin is photocurable, and provides a crosslinking density after the ink is cured and shaped, so that the ink is highly resistant to abrasion and perspiration. The leveling agent and the defoamer help the ink provide a good surface finish. The function of the coupling agent is to increase the crosslinking density and prevent local powder drop in an adhesion test.

In an embodiment, the ink includes the following ingredients by weight: pigment: 7 to 8 wt%; dispersant: 1 to 3 wt%; photoinitiator: 5 to 7 wt%; monofunctional reactive monomer: 10 to 13 wt%; multifunctional reactive monomer: 30 to 35 wt%; acrylic resin: 23 to 35 wt%; coupling agent: 3 to 4 wt%; defoamer: 0.1 to 0.5 wt%; and leveling agent: 0.1 to 0.5 wt%.

In an embodiment, the photoinitiator includes at least one of a free radical photoinitiator or a cationic photoinitiator. By complexing with the free radical photoinitiator and the cationic photoinitiator, the ink can be well adaptable to multi-band light sources, and the ink can be quickly dried to touch, thereby implementing deep curing. In addition, adding different photoinitiators and adjusting the mixing ratio can overcome incomplete curing of ink caused by too high content of pigment.

In an embodiment, the free radical photoinitiator includes at least one of 1-hydroxycyclohexyl phenyl ketone, 2-phenylbenzyl-2-dimethylamine-1-(4-morpholinebenzylphenyl)butanone, 2-isopropylthioxanthone, 2-methyl-1-(4-methylthiophenyl)-2-morpholine-1-acetone, diphenyl-(2,4,6-trimethylbenzoyl)phosphine oxide, 2,4-diethylthioxanthone, or phenyl bis(2,4,6-trimethylbenzoyl)phosphine oxide.

In an embodiment, the cationic photoinitiator includes at least one of bis-2,6-difluoro-3-pyrrolephenyl titanocene, sulfonium hexafluoroantimonate, diphenyl-(4-phenylthio)phenylsulfonium hexafluorophosphate, or η6-cumylferrocene hexafluorophosphate.

In an embodiment, the monofunctional reactive monomer includes at least one of lauryl acrylate, isobornyl acrylate, isobornyl methacrylate, N-vinylpyrrolidone, N,N-dimethylacrylamide, acryloyl morpholine, 2-phenoxy ethyl acrylate, o-phenylphenoxyethyl acrylate, or tetrahydrofuran acrylate.

In an embodiment, the multifunctional reactive monomer includes at least one of 1,6-hexanediol acrylate, dipropylene glycol diacrylate, 2-methyl-1,3-propanediol diacrylate, pentaerythritol triacrylate, trimethylolpropane triacrylate, or dipentaerythritol hexaacrylate.

In an embodiment, the acrylic resin includes at least two of polyurethane acrylic resin, polyester acrylic resin, epoxy acrylic resin, or polyether acrylic resin.

In an embodiment, the acrylic resin includes polyurethane acrylic resin and polyester acrylic resin. A degree of functionality of the polyurethane acrylic resin and a degree of functionality of the polyester acrylic resin are both 2 to 5.

The polyurethane acrylic resin possesses good physical properties and can provide high resistance to abrasion and perspiration after the ink is cured and shaped. Polyester acrylic resin exerts good effects of wetting and dispersing, and can well disperse the pigment in the ink, and can also avoid adding excessive dispersant. The excessive dispersant affects the overall crosslinking density, and thereby changes the overall performance of the ink. In addition, the polyester acrylic resin exerts high adhesion but is not well resistant to a solvent. After the ink is cured and shaped, a solvent for correcting the print made by the ink can easily wipe out the polyester acrylic resin, thereby reducing the difficulty and time of correction. By adjusting the content of the polyurethane acrylic resin and the polyester acrylic resin, the ink can achieve high adhesion, high resistance to abrasion, and ease of correction concurrently.

In an embodiment, a degree of polymerization of the acrylic resin is 200 to 500, and a viscosity of the acrylic resin is less than 2000 cps.

In an embodiment, the pigment includes at least one of titanium dioxide, zinc dioxide, lithopone, carbon black, graphite, iron black, or aniline black, and a particle diameter of the pigment ranges from 100 nm to 500 nm.

In an embodiment, the dispersant includes at least one of organosilicon-based wetting dispersant or acrylic modified organosilicon-based dispersant. The organosilicon-based wetting dispersant includes at least one of BYKJET-9133, BYKJET-9142, BYKJET-9151, BYKJET-9152, DISPERBYK-167, DISPERBYK-190, DISPERBYK-191, or DISPERBYK-2200.

This application further provides a method for preparing the ink. The preparation method includes the following steps:
adding pigment, dispersant, acrylic resin, and a part of a monofunctional reactive monomer into a reaction vessel, stirring at a speed of 300 to 500 r/min for 10 to 15 minutes first, and then increasing the speed to 800 to 1000 r/min, stirring for 25 to 30 minutes, and dispersing evenly to prepare a color paste;
milling the color paste until a particle size of the color paste is less than or equal to 5 µm; and
adding a photoinitiator into the reaction vessel, and stirring at a speed of 300 to 500 r/min for 10 to 15 minutes to dissolve all the photoinitiator; putting the milled color paste, a remaining part of the monofunctional reactive monomer, a multifunctional reactive monomer, a coupling agent, a defoamer, and a leveling agent into the reaction vessel in sequence, stirring at a speed of 800 to 1000 r/min for 1 to 2 hours until a homogenous state, and performing filtering and packaging to obtain the ink.

This application further provides a method for curing the ink. The curing method includes the following steps:
elementary curing: irradiating the ink with a first UV-LED lamp to superficially dry the ink, where a wavelength radiated by the first UV-LED lamp is 395 nm, curing energy is 1000 mj/cm², and power is 500 mW/cm²; and
deep curing: irradiating the elementarily cured ink with a second UV-LED lamp, where a hybrid wavelength radiated by the second UV-LED lamp is 365 nm, or 395 nm, or 405 nm, curing energy is 8000 to 12000 mj/cm², and power is 2000 to 2500 mW/cm².

Compared with the conventional heat-drying pad printing and screen printing inks, the UV-LED digital inkjet printing ink according to this application adopts UV-LED curing, and is less energy-consuming and faster than the heat-drying ink, and can effectively save electricity cost and labor cost. In addition, the UV-LED digital inkjet printing ink according to this application avoids the generation and emission of VOCs, and is safe and environmentally friendly; and can avoid exposure to light after the ink is uncapped. Therefore, the storage time of the uncapped ink is up to approximately one week, thereby greatly increasing the storage time of the ink and reducing the generation of waste ink. Compared with ordinary UV inks, by adjusting the mixing ratio between different initiators, the UV-LED digital inkjet printing ink according to this application overcomes incomplete UV curing caused by excessive pigment content; and adopts a LED light source of a hybrid wavelength that works together with the photoinitiators to solve the problem that the ink is cured to different depths. In addition, a small amount of cationic initiators is added to the formula to further mitigate the problem that the bottom is not fully curable. Therefore, the surface and the bottom of a wet film can be cured together, and the performance of the ink in use is improved. By balancing the ingredients of the ink and content of the acrylic resin, the ink can achieve the purposes of high adhesion, high resistance to abrasion, and ease of correction.

### DETAILED DESCRIPTION OF EMBODIMENTS

Unless otherwise defined, all technical and scientific terms used herein have the same meanings as those generally understood by a person skilled in the technical field of this application. The terms used herein are merely intended to describe specific embodiments but not to limit the embodiments of this application.

This application provides an ink, including the following ingredients by weight: pigment: 5 to 10 wt%; dispersant: 1 to 5 wt%; photoinitiator: 5 to 8 wt%; monofunctional reactive monomer: 10 to 15 wt%; multifunctional reactive monomer: 25 to 40 wt%; acrylic resin: 20 to 35 wt%; coupling agent: 2 to 5 wt%; defoamer: 0.1 to 1 wt%; and leveling agent: 0.1 to 1 wt%.

A main function of the pigment is to grant an overlaying force to the ink. Main functions of the monofunctional reactive monomer and the multifunctional reactive monomer are to reduce the viscosity of the ink, and enable the ink to be shaped by digital printing. By adjusting the mixing ratio between the monofunctional reactive monomer and the multifunctional reactive monomer, the viscosity of the ink can be adjusted, the crosslinking density can be increased, and the performance of the ink can be improved. In addition, the monofunctional reactive monomer and the multifunctional reactive monomer can adjust the wetting and penetration performance of the ink on a substrate, and increase the adhesion of the ink to the substrate. With the monofunctional reactive monomer and the multifunctional reactive monomer mixed at an appropriate ratio and accounting for an appropriate weight percent, the ink can generate more free radicals during curing, thereby increasing the curing speed of the ink. The acrylic resin is photocurable, and provides a crosslinking density after the ink is cured and shaped, so that the ink is highly resistant to abrasion and perspiration. The leveling agent and the defoamer help the ink provide a good surface finish. The function of the coupling agent is to increase the crosslinking density and prevent local powder drop in an adhesion test.

Further, the ink includes the following ingredients by weight: pigment: 7 to 8 wt%; dispersant: 1 to 3 wt%; photoinitiator: 5 to 7 wt%; monofunctional reactive monomer: 10 to 13 wt%; multifunctional reactive monomer: 30 to 35 wt%; acrylic resin: 23 to 35 wt%; coupling agent: 3 to 4 wt%; defoamer: 0.1 to 0.5 wt%; and leveling agent: 0.1 to 0.5 wt%.

In some embodiments, the photoinitiator includes at least one of a free radical photoinitiator or a cationic photoinitiator. By complexing with the free radical photoinitiator and the cationic photoinitiator, the ink can be well adaptable to multi-band light sources, and the ink can be quickly dried to touch, thereby implementing deep curing. In addition, adding different photoinitiators and adjusting the mixing ratio can overcome incomplete curing of ink caused by too high content of pigment.

Further, the free radical photoinitiator includes at least one of 1-hydroxycyclohexyl phenyl ketone (photoinitiator 184), 2-phenylbenzyl-2-dimethylamine-1-(4-morpholinebenzylphenyl)butanone (photoinitiator 369), 2-isopropylthioxanthone (ITX), 2-methyl-1-(4-methylthiophenyl)-2-morpholine-1-acetone (photoinitiator 907), diphenyl-(2,4,6-trimethylbenzoyl)phosphine oxide (TPO), 2,4-diethylthioxanthone (DETX), or phenyl bis(2,4,6-trimethylbenzoyl)phosphine oxide (photoinitiator 819).

Further, the cationic photoinitiator includes at least one of bis-2,6-difluoro-3-pyrrolephenyl titanocene (photoinitiator 784), sulfonium hexafluoroantimonate (photoinitiator 320), diphenyl-(4-phenylthio)phenylsulfonium hexafluorophosphate (photoinitiator UNI-6992), or η6-cumylferrocene hexafluorophosphate (photoinitiator 261).

In some embodiments, the monofunctional reactive monomer includes at least one of lauryl acrylate (LA), isobornyl acrylate (IBOA), isobornyl methacrylate (IBOMA), N-vinylpyrrolidone (NVP), N,N-dimethylacrylamide (DMAA), acryloyl morpholine (ACMO), 2-phenoxy ethyl acrylate (PHEA), o-phenylphenoxyethyl acrylate (OPPEA), or tetrahydrofuran acrylate (THFA).

In some embodiments, the multifunctional reactive monomer includes at least one of 1,6-hexanediol acrylate (HDDA), dipropylene glycol diacrylate (DPGDA), 2-methyl-1,3-propanediol diacrylate (MPDDA), pentaerythritol triacrylate (PET3A), trimethylolpropane triacrylate (TMPTA), or dipentaerythritol hexaacrylate (DPHA).

In some embodiments, the acrylic resin includes at least two of polyurethane acrylic resin, polyester acrylic resin, epoxy acrylic resin, or polyether acrylic resin.

Further, the acrylic resin includes polyurethane acrylic resin and polyester acrylic resin. A degree of functionality of the polyurethane acrylic resin and a degree of functionality of the polyester acrylic resin are both 2 to 5.

Further, the polyurethane acrylic resin includes trifunctional polyurethane acrylic resin. The polyester acrylic resin includes difunctional polyester acrylic resin. The polyether acrylic resin includes difunctional polyether acrylic resin.

The polyurethane acrylic resin possesses good physical properties and can provide high resistance to abrasion and perspiration after the ink is cured and shaped. Polyester acrylic resin exerts good effects of wetting and dispersing, and can well disperse the pigment in the ink, and can also avoid adding excessive dispersant. The excessive dispersant affects the overall crosslinking density, and thereby changes the overall performance of the ink. In addition, the polyester acrylic resin exerts high adhesion but is not well resistant to a solvent. After the ink is cured and shaped, a solvent for correcting the print made by the ink can easily wipe out the polyester acrylic resin, thereby reducing the difficulty and time of correction. By adjusting the content of the polyurethane acrylic resin and the polyester acrylic resin, the ink can achieve high adhesion, high resistance to abrasion, and ease of correction concurrently.

In some embodiments, a degree of polymerization of the acrylic resin is 200 to 500, and a viscosity of the acrylic resin is less than 2000 cps.

In some embodiments, the pigment includes at least one of titanium dioxide, zinc dioxide (zinc oxide), lithopone, carbon black, graphite, iron black, or aniline black. A particle diameter of the pigment ranges from 100 nm to 500 nm. Preferably, the pigment is titanium dioxide or carbon black. Further, the titanium dioxide is preferably rutile-type titanium dioxide. The rutile-type titanium dioxide does not absorb ultraviolet light, and does not affect the degree of UV curing. More preferably, the titanium dioxide is treated with an oily dispersant during production and milling, thereby reducing the amount of oil absorbed by the titanium dioxide powder, and reducing the impact on the viscosity of the ink.

In some embodiments, the dispersant includes at least one of an organosilicon-based wetting dispersant and an acrylic modified organosilicon-based dispersant. Further, the organosilicon-based wetting dispersant includes at least one of BYKJET-9133 (manufactured by BYK, and chemically formed from an alkylamine salt of high-molecular-weight polymer), BYKJET-9142 (manufactured by BYK, and chemically formed from a polymer containing a pigment-affinitive group), BYKJET-9151 (manufactured by BYK, and chemically formed from a structured copolymer containing a pigment-affinitive group), BYKJET-9152 (manufactured by BYK, and chemically formed from a copolymer containing a pigment-affinitive group), DISPERBYK-167 (manufactured by BYK, and chemically formed from a high-molecular-weight block copolymer solution containing a pigment-affinitive group, containing no aromatic hydrocarbon), DISPERBYK-190 (manufactured by BYK, and chemically formed from a high-molecular-weight block copolymer solution containing a pigment-affinitive group), DISPERBYK-191 (manufactured by BYK, and chemically formed from a copolymer containing a pigment-affinitive group), or DISPERBYK-2200 (manufactured by BYK, and chemically formed from a high-molecular-weight copolymer containing a pigment-affinitive group).

In some embodiments, the viscosity of the ink is 6 to 30 cps. With the viscosity falling within such a range, the ink is highly fluid, and can be smoothly ejected under a piezoelectric nozzle, so as to achieve a good inkjet printing effect. If the viscosity is excessive, the fluidity of the ink will be reduced, and leakage or shortage of link may occur during the inkjet printing. If the viscosity is deficient, the ink will flow back into the ink guide tube and generate air bubbles, thereby leading to appearance defects and blockage of the nozzle.

In some embodiments, the particle diameter D₅₀ of the oil ranges from 200 nm to 1200 nm, and D₉₀ ranges from 500 nm to 2000 nm. If the particle diameter is too large, ink droplets will be too large to pass through a gap of the nozzle, thereby causing problems of ink leakage or clogging. If the particle diameter is too small, the ink droplets will be small, and the ink will splash during the inkjet printing, thereby leading to inferior appearance and low printing precision.

In some embodiments, a surface tension of the ink is 22 to 28 mN/m. If the surface tension of the ink is too low, the ink is highly infiltrative, and may infiltrate internal components of the nozzle. In this case, if the aperture of the nozzle is reduced, the problem of ink leakage or clogging may occur, and the ink may moisten piezoelectric components to damage the nozzle. If the surface tension is too high, the ink droplets will be too large to pass through the gap of the nozzle, thereby causing the problem of ink leakage or clogging.

Further, the coupling agent is preferably a vinyl-endcapped silane coupling agent. The leveling agent is preferably a organosilicon system leveling agent. The defoamer is preferably an organosilicon defoamer and a polyether defoamer.

This application further provides a method for preparing the ink. The preparation method includes the following steps:
adding pigment, dispersant, acrylic resin, and a part of a monofunctional reactive monomer into a reaction vessel (such as a reactor), stirring at a speed of 300 to 500 r/min for 10 to 15 minutes first, and then increasing the speed to 800 to 1000 r/min, stirring for 25 to 30 minutes, and dispersing evenly to prepare a color paste;
milling the color paste until a particle size of the color paste is less than or equal to 5 µm; and
adding a photoinitiator into the reaction vessel (such as a reactor), and stirring at a speed of 300 to 500 r/min for 10 to 15 minutes to dissolve all the photoinitiator; putting the milled color paste, a remaining part of the monofunctional reactive monomer, a multifunctional reactive monomer, a coupling agent, a defoamer, and a leveling agent into the reaction vessel (such as a reactor) in sequence, stirring at a speed of 800 to 1000 r/min for 1 to 2 hours until a homogenous state, and performing filtering and packaging to obtain the ink.

This application further provides a method for curing the ink. The curing method includes the following steps:
elementary curing: irradiating the ink with a first UV-LED lamp to superficially dry the ink, where a wavelength radiated by the first UV-LED lamp is 395 nm, curing energy is 1000 mj/cm², and power is 500 mW/cm²; and
deep curing: irradiating the elementarily cured ink with a second UV-LED lamp, where a hybrid wavelength radiated by the second UV-LED lamp is 365 nm, or 395 nm, or 405 nm, curing energy is 8000 to 12000 mj/cm², and power is 2000 to 2500 mW/cm².

The ink is applied to the surface of a battery (mainly applied to the surface of an aluminum plastic film) for marking. The specific implementation process is as follows:
Cleaning: Cleaning the surface of the battery by using an air gun, so as to remove possible dust on the surface;
Plasma bombardment: Increasing the surface tension of the aluminum plastic film on the surface of the battery (from [34, 38] mN/m to [44, 46] mN/m) through plasma treatment before printing, so as to achieve a better leveling effect of the ink on the surface of the battery;
Inkjet printing: Printing a preset pattern on the surface of the aluminum plastic film by inkjet printing, where the print nozzle is optionally KJ4A-RH or the like;
Elementary curing: Irradiating the ink with a low-energy first UV-LED lamp to superficially dry the ink, where a wavelength radiated by the first UV-LED lamp is 395 nm, curing energy is 1000 mj/cm², and power is 500 mW/cm²;
Appearance inspection: Inspecting the printing appearance with an automatic optical inspection (AOI) device, and identifying the defectively printed battery products. In the elementary curing stage, reworking is relatively easy and the time needed to correct the print is reduced significantly because the ink has not been cured completely;
Deep curing: Irradiating the ink with a high-energy second UV-LED lamp so that the ink meets the adhesion requirement and the abrasion-resistant requirement, where a hybrid wavelength radiated by the second UV-LED lamp is 365 nm, or 395 nm, or 405 nm, curing energy is 8000 to 12000 mj/cm², and power is 2000 to 2500 mW/cm²;
Appearance inspection: Inspecting the appearance of the print with an automatic optical inspection (AOI) device, and packaging and storing qualified products; manually inspecting unqualified products, packaging and storing the products that have passed the manual inspection, and manually correcting the print of the products that have failed the manual inspection.

The following further describes this application with reference to specific embodiments and comparative embodiments.

### Embodiment 1

Step 1: Putting 7.5 wt% titanium dioxide, 3.4 wt% DISPERBYK-2200, 15 wt% difunctional polyester acrylic resin, 10 wt% trifunctional polyurethane acrylic resin, 5 wt% difunctional polyether acrylic resin, and 5 wt% N,N-dimethylacrylamide (DMAA) into a reactor in sequence, dispersing the mixture evenly by using a high-speed disperser, stirring the mixture at a speed of 300 r/min for 10 minutes, and then increasing the speed to 1000 r/min and stirring for 25 minutes, so that the mixture is well dispersed to prepare a color paste;
Step 2: Milling, by using a three-roller mill, the color paste prepared in Step 1 until the particle diameter is less than or equal to 5 µm;
Step 3: Putting 2.5 wt% 1-hydroxycyclohexyl phenyl ketone (photoinitiator 184), 1.5 wt% diphenyl-(2,4,6-trimethylbenzoyl)phosphine oxide (photoinitiator TPO), 0.8 wt% phenyl bis(2,4,6-trimethylbenzoyl)phosphine oxide (photoinitiator 819), 0.2 wt% bis-2,6-difluoro-3-pyrrolephenyl titanocene (photoinitiator 784), 3.5 wt% acryloyl morpholine (ACMO), 5 wt% isobornyl acrylate (IBOA), 10 wt% 1,6-hexanediol acrylate (HDDA), 12 wt% pentaerythritol triacrylate (PET3A), 5 wt% tetramethylpropanediamine (TMPDA), 3 wt% coupling agent, 0.2 wt% defoamer, and 0.3 wt% leveling agent into a reactor in sequence, dissolving all the initiators by using a high-speed disperser, stirring at a speed of 500 r/min for 15 minutes, then putting the color paste and other ingredients into the reactor separately, stirring the mixture at a speed of 1000 r/min for 1.5 hours, and, after the mixture is homogeneous, filtering the mixture through a 0.5 µm filter cartridge to obtain a UV-LED digital inkjet printing ink.

### Embodiment 2

Step 1: Putting 5.3 wt% carbon black, 3.4 wt% DISPERBYK-190, 17 wt% difunctional polyester acrylic resin, 8 wt% trifunctional polyurethane acrylic resin, 5 wt% epoxy acrylic resin, and 3.5 wt% acryloyl morpholine (ACMO) into a reactor in sequence, dispersing the mixture evenly by using a high-speed disperser, stirring the mixture at a speed of 300 r/min for 10 minutes, and then increasing the speed to 1000 r/min and stirring for 25 minutes, so that the mixture is well dispersed to prepare a color paste;
Step 2: Milling, by using a three-roller mill, the color paste prepared in Step 1 until the particle diameter is less than or equal to 5 µm;
Step 3: Putting 2.5 wt% 1-hydroxycyclohexyl phenyl ketone (photoinitiator 184), 2 wt% diphenyl-(2,4,6-trimethylbenzoyl)phosphine oxide (photoinitiator TPO), 1 wt% phenyl bis(2,4,6-trimethylbenzoyl)phosphine oxide (photoinitiator 819), 0.5 wt% 2-isopropyl thioxanthone (photoinitiator ITX), 11 wt% N-vinylpyrrolidone (NVP), 12 wt% 1,6-hexanediol acrylate (HDDA), 16 wt% pentaerythritol triacrylate (PET3A), 2.5 wt% coupling agent, 0.2 wt% defoamer, and 0.3 wt% leveling agent into the reactor in sequence, dissolving all the initiators by using a high-speed disperser, stirring at a speed of 500 r/min for 15 minutes, then putting the color paste and other ingredients into the reactor separately, stirring the mixture at a speed of 1000 r/min for 1.5 hours, and, after the mixture is homogeneous, filtering the mixture through a 0.5 µm filter cartridge to obtain a UV-LED digital inkjet printing ink.

### Embodiment 3

Step 1: Putting 3.3 wt% carbon black, 2 wt% graphite, 3.4 wt% DISPERBYK-190, 17 wt% difunctional polyester acrylic resin, 12 wt% trifunctional polyurethane acrylic resin, and 6 wt% N,N-dimethylacrylamide (DMAA) into a reactor in sequence, dispersing the mixture evenly by using a high-speed disperser, stirring the mixture at a speed of 300 r/min for 10 minutes, and then increasing the speed to 1000 r/min and stirring for 25 minutes, so that the mixture is well dispersed to prepare a color paste;
Step 2: Milling, by using a three-roller mill, the color paste prepared in Step 1 until the particle diameter is less than or equal to 5 µm;
Step 3: Putting 2.5 wt% 1-hydroxycyclohexyl phenyl ketone (photoinitiator 184), 2 wt% diphenyl-(2,4,6-trimethylbenzoyl)phosphine oxide (photoinitiator TPO), 1 wt% phenyl bis(2,4,6-trimethylbenzoyl)phosphine oxide (photoinitiator 819), 0.5 wt% bis-2,6-difluoro-3-pyrrolephenyl titanocene (photoinitiator 784), 8 wt% N-vinylpyrrolidone (NVP), 12 wt% 1,6-hexanediol acrylate (HDDA), 16 wt% pentaerythritol triacrylate (PET3A), 2.5 wt% coupling agent, 0.2 wt% defoamer, and 0.3 wt% leveling agent into the reactor in sequence, dissolving all the initiators by using a high-speed disperser, stirring at a speed of 500 r/min for 15 minutes, then putting the color paste and other ingredients into the reactor separately, stirring the mixture at a speed of 1000 r/min for 1.5 hours, and, after the mixture is homogeneous, filtering the mixture through a 0.5 µm filter cartridge to obtain a UV-LED digital inkjet printing ink.

### Embodiment 4

Step 1: Putting 5 wt% titanium dioxide, 1.5 wt% zinc dioxide, 2.7 wt% DISPERBYK-2200, 15 wt% difunctional polyester acrylic resin, 13 wt% trifunctional polyurethane acrylic resin, and 5 wt% N,N-dimethylacrylamide (DMAA) into a reactor in sequence, dispersing the mixture evenly by using a high-speed disperser, stirring the mixture at a speed of 300 r/min for 10 minutes, and then increasing the speed to 1000 r/min and stirring for 25 minutes, so that the mixture is well dispersed to prepare a color paste;
Step 2: Milling, by using a three-roller mill, the color paste prepared in Step 1 until the particle diameter is less than or equal to 5 µm;
Step 3: Putting 2.5 wt% 1-hydroxycyclohexyl phenyl ketone (photoinitiator 184), 1.8 wt% diphenyl-(2,4,6-trimethylbenzoyl)phosphine oxide (photoinitiator, TPO), 1.2 wt% phenyl bis(2,4,6-trimethylbenzoyl)phosphine oxide (photoinitiator 819), 0.2 wt% bis-2,6-difluoro-3-pyrrolephenyl titanocene (photoinitiator 784), 8 wt% N-vinylpyrrolidone (NVP), 6 wt% 1,6-hexanediol acrylate (HDDA), 6 wt% tetramethylpropanediamine (TMPDA), 14 wt% pentaerythritol triacrylate (PET3A), 3 wt% coupling agent, 0.2 wt% defoamer, and 0.3 wt% leveling agent into the reactor in sequence, dissolving all the initiators by using a high-speed disperser, stirring at a speed of 500 r/min for 15 minutes, then putting the color paste and other ingredients into the reactor separately, stirring the mixture at a speed of 1000 r/min for 1.5 hours, and, after the mixture is homogeneous, filtering the mixture through a 0.5 µm filter cartridge to obtain a UV-LED digital inkjet printing ink.

### Comparative Embodiment 1

Step 1: Putting 6.5 wt% titanium dioxide, 2.7 wt% DISPERBYK-2200, 15 wt% difunctional polyester acrylic resin, 13 wt% trifunctional polyurethane acrylic resin, and 5 wt% N,N-dimethylacrylamide (DMAA) into a reactor in sequence, dispersing the mixture evenly by using a high-speed disperser, stirring the mixture at a speed of 300 r/min for 10 minutes, and then increasing the speed to 1000 r/min and stirring for 25 minutes, so that the mixture is well dispersed to prepare a color paste;
Step 2: Milling, by using a three-roller mill, the color paste prepared in Step 1 until the particle diameter is less than or equal to 5 µm;
Step 3: Putting 2.5 wt% 1-hydroxycyclohexyl phenyl ketone (photoinitiator 184), 2.5 wt% diphenyl-(2,4,6-trimethylbenzoyl)phosphine oxide (photoinitiator, TPO), 8 wt% N-vinylpyrrolidone (NVP), 6 wt% 1,6-hexanediol acrylate (HDDA), 6 wt% tetramethylpropanediamine (TMPDA), 14 wt% pentaerythritol triacrylate (PET3A), 3 wt% coupling agent, 0.2 wt% defoamer, and 0.3 wt% leveling agent into the reactor in sequence, dissolving all the initiators by using a high-speed disperser, stirring at a speed of 500 r/min for 15 minutes, then putting the color paste and other ingredients into the reactor separately, stirring the mixture at a speed of 1000 r/min for 1.5 hours, and, after the mixture is homogeneous, filtering the mixture through a 0.5 µm filter cartridge to obtain a UV-LED digital inkjet printing ink.

### Comparative Embodiment 2

Step 1: Putting 6.5 wt% titanium dioxide, 2.7 wt% DISPERBYK-2200, 30 wt% difunctional polyester acrylic resin, and 5 wt% N,N-dimethylacrylamide (DMAA) into a reactor in sequence, dispersing the mixture evenly by using a high-speed disperser, stirring the mixture at a speed of 300 r/min for 10 minutes, and then increasing the speed to 1000 r/min and stirring for 25 minutes, so that the mixture is well dispersed to prepare a color paste;
Step 2: Milling, by using a three-roller mill, the color paste prepared in Step 1 until the particle diameter is less than or equal to 5 µm;
Step 3: Putting 2.5 wt% 1-hydroxycyclohexyl phenyl ketone (photoinitiator 184), 1.8 wt% diphenyl-(2,4,6-trimethylbenzoyl)phosphine oxide (photoinitiator TPO), 1.2 wt% phenyl bis(2,4,6-trimethylbenzoyl)phosphine oxide (photoinitiator 819), 8 wt% N-vinylpyrrolidone (NVP), 6 wt% 1,6-hexanediol acrylate (HDDA), 6 wt% tetramethylpropanediamine (TMPDA), 14 wt% pentaerythritol triacrylate (PET3A), 3 wt% coupling agent, 0.2 wt% defoamer, and 0.3 wt% leveling agent into the reactor in sequence, dissolving all the initiators by using a high-speed disperser, stirring at a speed of 500 r/min for 15 minutes, then putting the color paste and other ingredients into the reactor separately, stirring the mixture at a speed of 1000 r/min for 1.5 hours, and, after the mixture is homogeneous, filtering the mixture through a 0.5 µm filter cartridge to obtain a UV-LED digital inkjet printing ink.

### Comparative Embodiment 3

Step 1: Putting 6.5 wt% titanium dioxide, 2.7 wt% DISPERBYK-2200, 30 wt% trifunctional polyurethane acrylic resin, and 5 wt% N,N-dimethylacrylamide (DMAA) into a reactor in sequence, dispersing the mixture evenly by using a high-speed disperser, stirring the mixture at a speed of 300 r/min for 10 minutes, and then increasing the speed to 1000 r/min and stirring for 25 minutes, so that the mixture is well dispersed to prepare a color paste;
Step 2: Milling, by using a three-roller mill, the color paste prepared in Step 1 until the particle diameter is less than or equal to 5 µm;
Step 3: Putting 2.5 wt% 1-hydroxycyclohexyl phenyl ketone (photoinitiator 184), 1.8 wt% diphenyl-(2,4,6-trimethylbenzoyl)phosphine oxide (photoinitiator, TPO), 1.2 wt% phenyl bis(2,4,6-trimethylbenzoyl)phosphine oxide (photoinitiator 819), 0.2 wt% bis-2,6-difluoro-3-pyrrolephenyl titanocene (photoinitiator 784), 8 wt% N-vinylpyrrolidone (NVP), 6 wt% 1,6-hexanediol acrylate (HDDA), 6 wt% tetramethylpropanediamine (TMPDA), 14 wt% pentaerythritol triacrylate (PET3A), 3 wt% coupling agent, 0.2 wt% defoamer, and 0.3 wt% leveling agent into the reactor in sequence, dissolving all the initiators by using a high-speed disperser, stirring at a speed of 500 r/min for 15 minutes, then putting the color paste and other ingredients into the reactor separately, stirring the mixture at a speed of 1000 r/min for 1.5 hours, and, after the mixture is homogeneous, filtering the mixture through a 0.5 µm filter cartridge to obtain a UV-LED digital inkjet printing ink.

### Comparative Embodiment 4

The ink in Comparative Embodiment 4 is a BK black inkjet printing ink manufactured by Dongguan MJH Printing Consumables Co. Ltd..

Table 1 shows the selection and content of ingredients of the ink in the foregoing embodiments and comparative embodiments.

**Table 1**

| | | | | | |
|---|---|---|---|---|---|
| Embodiment 1 | Pigment | Titanium dioxide, 7.5 wt% | Embodiment 2 | Pigment | Carbon black, 5.3 wt% |
| | Dispersant | DISPERBYK-2200, 3.4 wt% | | Dispersant | DISPERBYK-190, 3.4 wt% |
| | Acrylic resin | Difunctional polyester acrylic resin, 15 wt% | | Acrylic resin | Difunctional polyester acrylic resin, 17 wt% |
| | | Trifunctional polyurethane acrylic resin, 10 wt% | | | Trifunctional polyurethane acrylic resin, 8 wt% |
| | | Difunctional polyether acrylic resin, 5 wt% | | | Epoxy acrylic resin, 5 wt% |
| | Monofunctional reactive monomer | DMAA, 5 wt% | | Monofunctional reactive monomer | ACMO, 3.5 wt% |
| | | ACMO, 3.5 wt% | | | NVP, 11 wt% |
| | | IBOA, 5 wt% | | | / |
| | Multifunctional reactive monomer | HDDA, 10 wt% | | Multifunctional reactive monomer | HDDA, 12 wt% |
| | | PET3A, 12 wt% | | | PET3A, 16 wt% |
| | | TMPDA, 5 wt% | | | / |
| | Photoinitiator | Photoinitiator 184, 2.5 wt% | | Photoinitiator | Photoinitiator 184, 2.5 wt% |
| | | Photoinitiator TPO, 1.5 wt% | | | Photoinitiator TPO, 2 wt% |
| | | Photoinitiator 819, 0.8 wt% | | | Photoinitiator 819, 1 wt% |
| | | Photoinitiator 784, 0.2 wt% | | | Photoinitiator ITX, 0.5 wt% |
| | Coupling agent | 3 wt% | | Coupling agent | 2.5 wt% |
| | Defoamer | 0.2 wt% | | Defoamer | 0.2 wt% |
| | Leveling agent | 0.3 wt% | | Leveling agent | 0.3 wt% |
| Embodiment 3 | Pigment | Graphite, 2 wt%; carbon black, 3.3 wt% | Embodiment 4 | Pigment | Titanium dioxide, 5 wt%; zinc dioxide, 1.5 wt% |
| | Dispersant | DISPERBYK-190, 3.4 wt% | | Dispersant | DISPERBYK-2200, 2.7 wt% |
| | Acrylic resin | Difunctional polyester acrylic resin, 17 wt% | | Acrylic resin | Difunctional polyester acrylic resin, 15 wt% |
| | | Trifunctional polyurethane acrylic resin, 12 wt% | | | Trifunctional polyurethane acrylic resin, 13 wt% |
| | | / | | | / |
| | Monofunctional reactive monomer | DMAA, 6 wt% | | Monofunctional reactive monomer | DMAA, 5 wt% |
| | | NVP, 8 wt% | | | NVP, 8 wt% |
| | | / | | | / |
| | Multifunctional reactive monomer | HDDA, 12 wt% | | Multifunctional reactive monomer | HDDA, 6 wt% |
| | | PET3A, 16 wt% | | | TMPDA, 6 wt% |
| | | / | | | PET3A, 14 wt% |
| | Photoinitiator | Photoinitiator 184, 2.5 wt% | | Photoinitiator | Photoinitiator 184, 2.5 wt% |
| | | Photoinitiator TPO, 2 wt% | | | Photoinitiator TPO, 1.8 wt% |
| | | Photoinitiator 819, 1 wt% | | | Photoinitiator 819, 1.2 wt% |
| | | Photoinitiator 784, 0.5 wt% | | | Photoinitiator 784, 0.2 wt% |
| | Coupling agent | 2.5 wt% | | Coupling agent | 3 wt% |
| | Defoamer | 0.2 wt% | | Defoamer | 0.2 wt% |
| | Leveling agent | 0.3 wt% | | Leveling agent | 0.3 wt% |
| Comparative Embodiment 1 | Pigment | Titanium dioxide, 6.5 wt% | Comparative Embodiment 2 | Pigment | Titanium dioxide, 6.5 wt% |
| | Dispersant | DISPERBYK-2200, 2.7 wt% | | Dispersant | DISPERBYK-2200, 2.7 wt% |
| | Acrylic resin | Difunctional polyester acrylic resin, 15 wt% | | Acrylic resin | Difunctional polyester acrylic resin, 30 wt% |
| | | Trifunctional polyurethane acrylic resin, 13 wt% | | | / |
| | | / | | | / |
| | Monofunctional reactive monomer | DMAA, 5 wt% | | Monofunctional reactive monomer | DMAA, 5 wt% |
| | | NVP, 8 wt% | | | NVP, 8 wt% |
| | | / | | | / |
| | Multifunctional reactive monomer | HDDA, 6 wt% | | Multifunctional reactive monomer | HDDA, 6 wt% |
| | | PET3A, 14 wt% | | | PET3A, 14 wt% |
| | | TMPDA, 6 wt% | | | TMPDA, 6 wt% |
| | Photoinitiator | Photoinitiator 184, 2.5 wt% | | Photoinitiator | Photoinitiator 184, 2.5 wt% |
| | | Photoinitiator TPO, 1.5 wt% | | | Photoinitiator TPO, 2 wt% |
| | | Photoinitiator 819, 0.8 wt% | | | Photoinitiator 819, 1 wt% |
| | | / | | | Photoinitiator ITX, 0.5 wt% |
| | Coupling agent | 3 wt% | | Coupling agent | 3 wt% |
| | Defoamer | 0.2 wt% | | Defoamer | 0.2 wt% |
| | Leveling agent | 0.3 wt% | | Leveling agent | 0.3 wt% |
| Comparative Embodiment 3 | Pigment | Titanium dioxide, 6.5 wt% | Comparative Embodiment 4 | Pigment | / |
| | Dispersant | DISPERBYK-2200, 2.7 wt% | | Dispersant | / |
| | Acrylic resin | / | | Acrylic resin | / |
| | | Trifunctional polyurethane acrylic resin, 30 wt% | | | / |
| | | / | | | / |
| | Monofunctional reactive monomer | DMAA, 5 wt% | | Monofunctional reactive monomer | / |
| | | NVP, 8 wt% | | | / |
| | | / | | | / |
| | Multifunctional reactive monomer | HDDA, 6 wt% | | Multifunctional reactive monomer | / |
| | | TMPDA, 6 wt% | | | / |
| | | PET3A, 14 wt% | | | / |
| | Photoinitiator | Photoinitiator 184, 2.5 wt% | | Photoinitiator | / |
| | | Photoinitiator TPO, 2 wt% | | | / |
| | | Photoinitiator 819, 1 wt% | | | / |
| | | Photoinitiator 784, 0.5 wt% | | | / |
| | Coupling agent | 3 wt% | | Coupling agent | / |
| | Defoamer | 0.2 wt% | | Defoamer | / |
| | Leveling agent | 0.3 wt% | | Leveling agent | / |

The performance of the ink and the printed and cured ink layers is tested based on the following methods:
With reference to GB/T10247-2008, measuring ink viscosity by using an AND SV-10 sine wave vibration viscometer.

With reference to GB/T22237-2008, testing the surface tension of the ink by using a Biolin Sigma-710 tensiometer.

With reference to GB/T33328-2016, testing the conductivity of the ink by using Leici DDS-307A.

With reference to GB/T23769-2009, testing the pH value of the ink by using Leici PHSJ-3F.

With reference to GB/T29022-2012, testing the particle size of the ink by using Malvern Mastersizer 3000.

With reference to QB/T2309-2010, testing the eraser-resistant performance of the ink by using Shenzhen Better NM-025. The ink passes the test if no ink is dropped from the sample after being erased for 30 cycles under a load of 500 grams.

Method for testing whether the ink is fully cured: After curing, leaving the ink to stand for 1 hour, performing a sectioning analysis, and wiping the cut surface with a cotton swab to check whether there is ink on the cotton swab. If there is ink on the cotton swab, the curing is not complete.

Adhesion test: Testing the adhesion of the cured ink by using 3M600 adhesive tape based on the following method: Sticking the 3M adhesive tape onto the ink, manually expelling air under the adhesive tape, and then quickly pulling up the tape at an angle of 90°. Repeating the foregoing operations for 5 times. If there is no conspicuous ink residue on the adhesive tape, the ink passes the test.

Perspiration-resistance test: Testing the perspiration-resistance of the ink by using Shenzhen Better NM-025, wrapping the test head with a dust-free cloth, and then using three types of simulated sweat with PH values of 4.7, 6.8, and 8.8, respectively, to infiltrate the sample, and then rubbing the sample under a load of 500 grams at a speed of 42 r/min. The ink passes the test if no ink is dropped from the sample after being rubbed for 20 cycles.

Correction performance test: Moistening a dust-free cloth with a correction solvent (a mixed solution of ethanol and acetone), then gently wiping the ink layer with the cloth. The time spent in thoroughly wiping out the ink is a correction time. Observing whether the surface of the aluminum plastic film is damaged after the ink is wiped out.

Table 2 shows the test results.

**Table 2**

| Test items | Embodiment 1 | Embodiment 2 | Embodiment 3 | Embodiment 4 | Comparative Embodiment 1 | Comparative Embodiment 2 | Comparative Embodiment 3 | Comparative Embodiment 4 |
|---|---|---|---|---|---|---|---|---|
| Viscosity (cps) | 21.5 | 19.3 | 18.5 | 20.7 | 17.5 | 22.8 | 21.5 | 11.3 |
| Surface tension | 22.4 | 23.7 | 23.4 | 21.8 | 23.5 | 22.9 | 25.3 | 25.3 |
| Conductivity (µs/cm) | 5.4 | 5.2 | 6.3 | 4.1 | 7.3 | 4.9 | 5.8 | 7.9 |
| pH value | 6.73 | 6.83 | 6.69 | 6.69 | 6.89 | 6.77 | 6.51 | 7.24 |
| Particle diameter (D₅₀) (nm) | 524 | 533 | 563 | 558 | 542 | 589 | 547 | 382 |
| Particle diameter (D₉₀) (nm) | 1130 | 978 | 1089 | 1320 | 1140 | 1200 | 1050 | 792 |
| Completely cured | Yes | Yes | Yes | Yes | No | Yes | Yes | No |
| Abrasion-resistance test | Pass | Pass | Pass | Pass | Pass | NG | Pass | Pass |
| Perspiration-resistance (pH 4.7) | Pass | Pass | Pass | Pass | Pass | NG | Pass | Pass |
| Perspiration-resistance (pH 6.8) | Pass | Pass | Pass | Pass | Pass | NG | Pass | Pass |
| Perspiration-resistance (pH 8.8) | Pass | Pass | Pass | Pass | Pass | NG | Pass | NG |
| Adhesion test | Pass | Pass | Pass | Pass | Pass | Pass | Pass | Pass |
| Time needed for correction (s) | 50 | 58 | 62 | 70 | 65 | 35 | ≥ 600 | ≥ 600 |
| Correction effect (whether the aluminum plastic film is damaged) | Not damaged | Not damaged | Not damaged | Not damaged | Not damaged | Not damaged | Damaged | Damaged |

As can be seen from Table 1 and Table 2, the ink in Comparative Embodiment 1 is not completely cured due to insufficient content of the photoinitiator. The ink in Comparative Embodiment 2 fails the abrasion-resistance test and the perspiration-resistance test for lack of polyurethane acrylic resin. The ink in Comparative Embodiment 3 leads to a long time of correction and damages the surface of the aluminum plastic film for lack of polyester acrylic resin. The commercially available ink in Comparative Embodiment 4 exhibits a low level of performance in terms of deep curing, perspiration-resistance, correction time, correction effect, and the like. By contrast, the inks in Embodiments 1 to 4 of this application can concurrently meet various performance requirements on deep curing, high adhesion, abrasion-resistance, perspiration-resistance, and ease of correction.

Compared with the conventional heat-drying pad printing and screen printing inks, the UV-LED digital inkjet printing ink according to this application adopts UV-LED curing, so that the curing is less energy-consuming and faster than the curing of the heat-drying ink, thereby effectively saving electricity cost and labor cost. In addition, the UV-LED digital inkjet printing ink according to this application avoids the generation and emission of VOCs, and is safe and environmentally friendly; and can avoid exposure to light after the ink is uncapped. Therefore, the uncapped ink can be stored for a period of up to approximately one week, thereby greatly increasing the storage time of the uncapped ink and reducing the generation of waste ink. Compared with ordinary UV inks, by adjusting the mixing ratio between different initiators, the UV-LED digital inkjet printing ink according to this application overcomes incomplete UV curing caused by excessive pigment content; and adopts a LED light source of a hybrid wavelength that works together with the photoinitiators to solve the problem that the ink is cured to different depths. In addition, a small amount of cationic initiators is added to the formula to further mitigate the problem that the bottom is not fully curable. Therefore, the surface and the bottom of a wet film can be cured together, and the performance of the ink in use is improved. By balancing the ingredients of the ink and content of the acrylic resin, the ink can achieve the purposes of high adhesion, high resistance to abrasion, and ease of correction.

What is described above is some specific embodiments of this application, but this application is not limited to the embodiments in practical applications. Other variations and modifications, which may be made by a person of ordinary skill in the art based on the technical conception of this application, fall within the protection scope of this application.

## Claims

1. An ink, **characterized in that** the ink comprises the following ingredients by weight:
pigment: 5 to 10 wt%;
dispersant: 1 to 5 wt%;
photoinitiator: 5 to 8 wt%;
monofunctional reactive monomer: 10 to 15 wt%;
multifunctional reactive monomer: 25 to 40 wt%;
acrylic resin: 20 to 35 wt%;
coupling agent: 2 to 5 wt%;
defoamer: 0.1 to 1 wt%; and
leveling agent: 0.1 to 1 wt%.

2. The ink according to claim 1, **characterized in that** the ink comprises the following ingredients by weight:
pigment: 7 to 8 wt%;
dispersant: 1 to 3 wt%;
photoinitiator: 5 to 7 wt%;
monofunctional reactive monomer: 10 to 13 wt%;
multifunctional reactive monomer: 30 to 35 wt%;
acrylic resin: 23 to 30 wt%;
coupling agent: 3 to 4 wt%;
defoamer: 0.1 to 0.5 wt%; and
leveling agent: 0.1 to 0.5 wt%.

3. The ink according to claim 1, **characterized in that** the photoinitiator comprises at least one of a free radical photoinitiator or a cationic photoinitiator.

4. The ink according to claim 3, **characterized in that** the free radical photoinitiator comprises at least one of 1-hydroxycyclohexyl phenyl ketone, 2-phenylbenzyl-2-dimethylamine- 1 -(4-morpholinebenzylphenyl)butanone, 2-isopropylthioxanthone, 2-methyl-1-(4-methylthiophenyl)-2-morpholine-1-acetone, diphenyl-(2,4,6-trimethylbenzoyl)phosphine oxide, 2,4-diethylthioxanthone, or phenyl bis(2,4,6-trimethylbenzoyl)phosphine oxide.

5. The ink according to claim 3, **characterized in that** the cationic photoinitiator comprises at least one of bis-2,6-difluoro-3-pyrrolephenyl titanocene, sulfonium hexafluoroantimonate, diphenyl-(4-phenylthio)phenylsulfonium hexafluorophosphate, or η6-cumylferrocene hexafluorophosphate.

6. The ink according to claim 1, **characterized in that** the monofunctional reactive monomer comprises at least one of lauryl acrylate, isobornyl acrylate, isobornyl methacrylate, N-vinylpyrrolidone, N,N-dimethylacrylamide, acryloyl morpholine, 2-phenoxy ethyl acrylate, o-phenylphenoxyethyl acrylate, or tetrahydrofuran acrylate.

7. The ink according to claim 1, **characterized in that** the multifunctional reactive monomer comprises at least one of 1,6-hexanediol acrylate, dipropylene glycol diacrylate, 2-methyl-1,3-propanediol diacrylate, pentaerythritol triacrylate, trimethylolpropane triacrylate, or dipentaerythritol hexaacrylate.

8. The ink according to claim 1, **characterized in that** the acrylic resin comprises at least two of polyurethane acrylic resin, polyester acrylic resin, epoxy acrylic resin, or polyether acrylic resin.

9. The ink according to claim 8, **characterized in that** the acrylic resin comprises polyurethane acrylic resin and polyester acrylic resin, and a degree of functionality of the polyurethane acrylic resin and a degree of functionality of the polyester acrylic resin are both 2 to 5.

10. The ink according to claim 1, **characterized in that** a degree of polymerization of the acrylic resin is 200 to 500, and a viscosity of the acrylic resin is less than 2000 cps.

11. The ink according to claim 1, **characterized in that** the pigment comprises at least one of titanium dioxide, zinc dioxide, lithopone, carbon black, graphite, iron black, or aniline black, and a particle diameter of the pigment ranges from 100 nm to 500 nm.

12. The ink according to claim 1, **characterized in that** the dispersant comprises at least one of organosilicon-based wetting dispersant or acrylic modified organosilicon-based dispersant, and the organosilicon-based wetting dispersant comprises at least one of BYKJET-9133, BYKJET-9142, BYKJET-9151, BYKJET-9152, DISPERBYK-167, DISPERBYK-190, DISPERBYK-191, or DISPERBYK-2200.

13. A method for preparing the ink according to any one of claims 1 to 12, **characterized in that** the preparation method comprises the following steps:
adding pigment, dispersant, acrylic resin, and a part of a monofunctional reactive monomer into a reaction vessel, stirring at a speed of 300 to 500 r/min for 10 to 15 minutes first, and then increasing the speed to 800 to 1000 r/min, stirring for 25 to 30 minutes, and dispersing evenly to prepare a color paste;
milling the color paste until a particle size of the color paste is less than or equal to 5 µm; and
adding a photoinitiator into the reaction vessel, and stirring at a speed of 300 to 500 r/min for 10 to 15 minutes to dissolve all the photoinitiator; putting the milled color paste, a remaining part of the monofunctional reactive monomer, a multifunctional reactive monomer, a coupling agent, a defoamer, and a leveling agent into the reaction vessel in sequence, stirring at a speed of 800 to 1000 r/min for 1 to 2 hours until a homogenous state, and performing filtering and packaging to obtain the ink.

14. A method for curing the ink according to any one of claims 1 to 12, **characterized in that** the curing method comprises the following steps:
elementary curing: irradiating the ink with a first UV-LED lamp to superficially dry the ink, wherein a wavelength radiated by the first UV-LED lamp is 395 nm, curing energy is 1000 mj/cm², and power is 500 mW/cm²; and
deep curing: irradiating the elementarily cured ink with a second UV-LED lamp, wherein a hybrid wavelength radiated by the second UV-LED lamp is 365 nm, or 395 nm, or 405 nm, curing energy is 8000 to 12000 mj/cm², and power is 2000 to 2500 mW/cm².
